# EUROPÄISCHE PATENTANMELDUNG

(11) **EP 1 528 222 A1**
(43) Veröffentlichungstag der Anmeldung: **04.05.2005**
(21) Anmeldenummer: 04105250.7
(22) Anmeldetag: 22.10.2004
(51) Int. Cl.: E21F 16/02, C02F 5/00

(54) **Verfahren zur Verhinderung von Kalkablagerungen in Tunneldränagen**

(30) Priorität: 27.10.2003 AT 17002003
(71) Anmelder: Schretter & Cie, 6682 Vils (AT)
(72) Erfinder: Röck, Rudolf, Dr., 6682 Vils (AT)
(74) Vertreter: Müllner, Erwin, Dr.

(57) **Zusammenfassung**

Zur Verhinderung von Kalkablagerungen in Tunneldränagen wird dem Ableitungsgerinne Spülwasser in einer durchschnittlichen Menge von 0,1 bis 200 l/s, insbesondere 0,5 bis 10 l/s aufgegeben. Vorzugsweise wird das Spülwasser intermittierend zugegeben.

## Beschreibung

### Technisches Gebiet

Die vorliegende Erfindung betrifft ein Verfahren zur Verhinderung von Kalkablagerungen in Tunneldränagen.

### Stand der Technik

Sowohl Bahntunnel als auch Straßentunnel sind mit Ableitungsgerinnen (Tunneldränagen) zur Abführung der im Tunnel anfallenden Bergwässer ausgestattet. Diese Ableitungsgerinne erhalten ihren Wasserzulauf im Allgemeinen über einen das Gerinne umgebenden Filterbeton. Hinter der Tunneldichtung kann das anfallende Bergwasser nach Durchtritt durch die Filterbetonschicht in das Ableitungsgerinne gelangen.

Die anfallenden Wässer können, da sie in direktem Kontakt mit zunächst frischem Beton (in der Regel Spritzbeton oder Tübbinghinterfüllbeton) stehen, aus diesem Kalziumhydroxid und andere lösliche Stoffe herauslösen und mit sich führen. Es kann aber auch sein, dass die Bergwässer von vorneherein eine hohe Kalkhärte und damit hohe Kalziumkonzentrationen aufweisen.

Die im anfallenden Wasser auftretenden Kalziumkonzentrationen sind abhängig von der Fließgeschwindigkeit, der Kontaktzeit mit dem Beton und damit ausschlaggebend von der Menge des gerade anfallenden Wassers. Geringe Wasseranfallmengen zeigen in der Regel hohe Belastung an gelösten Stoffen, während bei hohem Wasseranfall, etwa infolge starker Regenfälle, die Lösungsfracht geringer sein wird.

In den Ableitungsgerinnen beobachtet man besonders an Stellen geringer Fließgeschwindigkeit bereits nach kurzer Zeit Ablagerungen von Kalkstein, der bisweilen hohe Festigkeiten erreichen kann. In vielen Tunneln wachsen diese Kalkablagerungen so schnell, dass sie in wenigen Monaten die Gerinne verstopfen und sie damit ihrer Funktion entheben. Mittels mechanischer und hydromechanischer Methoden müssen die Gerinne mit viel Aufwand und Kosten von den Aussinterungen gereinigt werden, um die Funktion wieder herzustellen.

Von Tunnelbetreibern wird gesagt, dass der Wartungsaufwand zu 90% aus den regelmäßig durchzuführenden Dränagespülungen resultiert.

Um diese immensen Kosten zu senken, wurden die verschiedensten Methoden versucht. So brachte es etwa einen gewissen Erfolg, die Gerinne so zu konstruieren, dass sie möglichst wenige Krümmungen, Schachtaufweitungen, Hindernisse und Überläufe aufweisen.

Eine weitere Methode zielt auf eine chemische Behandlung der abgeleiteten Wässer mittels Polyasperaginsäure-Tabs oder anderer Chemikalien ab. Die Fällungsneigung des Kalkes soll damit vermindert werden. Derartige Verfahren sind in der US 3917530 A, CH 686040 A, CH 689452 Aund der DE 10101671 Abeschrieben.

Nachteilig sind dabei natürlich die Kosten für die notwendigen Chemikalien, und auch Umweltschäden sind dabei nicht immer auszuschließen.

### Offenbarung der Erfindung

### Technische Aufgabe

Es ist Aufgabe der vorliegenden Erfindung, ein Verfahren zur Verhinderung von Kalkablagerungen in Tunneldränagen zu schaffen, das einfach und kostengünstig durchzuführen ist.

### Technische Lösung

Diese Aufgabe wird erfindungsgemäß dadurch gelöst, dass dem Ableitungsgerinne ständig, und zwar entweder kontinuierlich oder intermittierend, Spülwasser in einer durchschnittlichen Menge von 0,1 bis 200 l/s, insbesondere 0,5 bis 10 l/s aufgegeben wird.

Die Ableitungsgerinne können ständig mit einem gleichbleibenden, ausreichend hohen Wasserstrom gespült werden. Das dafür benötigte Wasser kann in der Regel aus in der Nähe befindlichen Fließgewässern oder anderen Gewässern entnommen werden und nach dem Tunnel auch in diese oder in ein anderes wieder rückgeführt werden. Die notwendige Wassermenge richtet sich nach der Lösungsfracht des Bergwassers, nach dem vorherrschenden Gefälle, nach der Fließgeschwindigkeit und nach der Qualität des zur Verfügung stehenden Spülwassers.

Sollen Tunnel mit einem Scheitelpunkt bedient werden, so muss das dafür notwendige Spülwasser in einer getrennten Druckleitung mittels einer Pumpe an den Scheitelpunkt geführt werden, wo es dem Ableitungsgerinne aufgegeben werden kann.

Anstatt eines gleichmäßigen Wasserstroms kann das Spülwasser intermittierend zugegeben werden. Es sind dann natürlich jeweils größere Mengen notwendig, um die angegebenen Durchschnittswerte einzuhalten. Durch die größeren Mengen werden allfällig sedimentierte Schwebestoffe durch den Anfangsschwall mitgespült.

Die Frequenz der Unterbrechung darf nur im Bereich weniger Minuten sein. Es muss in jedem Falle ein Aufkonzentrieren der Lösungsfracht durch Verdunstung sowie eine Erwärmung des Restwassers verhindert werden. Der Vorteil der intermittierenden Fahrweise ist, dass mit der gleichen Wassermenge höhere Fließgeschwindigkeitsspitzen erzielbar sind, sodass allfällig sedimentierte Schwebeteilchen im Anfangsschwall wieder mitgespült werden können. Der Nachteil ist die zusätzlich erforderliche Schaltanlage, die den regelmäßigen Unterbruch des Spülwassers bewerkstelligt.

Die Dauer des Spülintervalls im Verhältnis zur Dauer des Unterbruchs hängt von der Tunnellänge und vom Gefälle ab, da sich mit fortschreitender Strecke der Schwall verflacht und damit weniger wirksam wird. Bei geringem Gefälle und langen Strecken erhöht sich die Dauer des Spülintervalls.

### Beste Ausführungsform der Erfindung

Wenn man die Fällungsbedingungen für Kalzium näher beleuchtet, so ergeben sich folgende Einflussgrößen:

1. Der CO₂ -Partialdruck: Solange das Wasser sich im Berg befindet, ist der CO₂ -Partialdruck hoch, das CO₂ kann also nicht aus der Lösung austreten, eine Kalziumfällung wird nicht stattfinden. Erst wenn das Bergwasser in das offene Gerinne gelangt, sinkt der CO₂ -Partialdruck und Kalzium kann ausgefällt werden.

2. Kalziumionen sind bei niedrigen Temperaturen besser in Wasser löslich als bei hohen. Das in der Regel gleichmäßig kalte (6-12°C) Bergwasser kann, insbesondere bei sehr geringem Anfall, im Ableitungsgerinne angewärmt werden, sodass die Kalziumlöslichkeitsgrenze überschritten werden kann und ein Kalziumcarbonatniederschlag auftreten kann.

3. Wie bereits erwähnt, treten je nach Wassermenge stark unterschiedliche Konzentrationen von gelöstem CO₂ und Ca-Ionen auf. Das kann soweit gehen, dass übersättigte Lösungen in das Gerinne gelangen, wo sie augenblicklich ihre Lösungsfracht abgeben und zur Versinterung der Dränagen beitragen.

4. Die Fällungsneigung und besonders die Ablagerung harter Versinterungen wird durch langsamen Fluss oder ruhende Bereiche begünstigt.

Bezüglich der aufzugebenden Menge an Spülwasser sind folgende Aspekte zu berücksichtigen:
a.) Die Kapazität des Ableitungsgerinnes sollte durch diese Maßnahme nicht unnötig beschränkt werden. Bei allenfalls kurzzeitig auftretendem Mehranfall an Bergwasser könnte unter Umständen sogar vorübergehend auf eine zusätzliche Dauerspülung verzichtet werden.
b.) Stehen als Spülwasser Wässer geringer Härte zur Verfügung, kann die Spülmenge geringer gehalten werden. Weist das Spülwasser bereits eine hohe Lösungsfracht auf, muss die Menge erhöht werden, damit durch die höhere Fließgeschwindigkeit dieses Manko ausgeglichen werden kann.
c.) Kalte Spülwässer sind zu bevorzugen, obschon dieser Einfluss nicht entscheidend ist.

Mit der genannten einfachen Maßnahme werden alle entscheidenden Punkte, die zur Versinterung beitragen, weitgehend ausgeschaltet. Die Temperatur wird konstant gehalten, hochkonzentrierte oder übersättigte Lösungen werden sofort verdünnt, und die Fließgeschwindigkeit ist gleichmäßig und stets hoch, sodass eine Versinterung nicht eintreten kann.

Experimentell ist das leicht nachzuweisen, da bekannt ist, dass Trinkwasserleitungen sowohl in geschlossenen Röhren als auch in offenen Gerinnen auch bei vergleichsweise geringen Wasserführungen von wenigen Sekundenlitern nicht zusintern und oft jahrzehntelang in Funktion bleiben.

Die Kosten der erfindungsgemäßen Maßnahmen beschränken sich allenfalls auf eine Pumpanlage, die die benötigte Wassermenge zum Tunnelportal oder zum Tunnelscheitel heranführt.

Bezüglich der wasserrechtlichen Genehmigung ist die Gefahr der Einleitung von schädlichen Stoffen im Falle von Unfällen im Tunnel zu berücksichtigen. Eventuell sind Vorkehrungen zu treffen, die eine Beeinträchtigung der Vorfluter hintanhalten. Diese Vorkehrungen sind jedoch auch ohne Dauerspülung obligat.

Ausführungsbeispiel 1

Bei einer Wasserhärte von 6°dH , einem Gerinnequerschnitt von 150 mm und einem durchschnittlichen Gefälle von 3% reicht eine Dauerspülmenge von 1 l/s aus, um langfristig Versinterung von Tunneldränagen zu unterbinden.

Ausführungsbeispiel 2

Bei gleichen Verhältnissen wie in Beispiel 1 kann für 15 Sekunden ein Spülstrom von 10 l/s aufgegeben werden, der anschließend für 2:45 Minuten unterbrochen wird. Damit wird ein durchschnittlicher Spülstrom von 0,83 l/s aufgegeben.

## Patentansprüche

1. Verfahren zur Verhinderung von Kalkablagerungen in Tunneldränagen,
**dadurch gekennzeichnet, dass** dem Ableitungsgerinne ständig, und zwar entweder kontinuierlich oder intermittierend, Spülwasser in einer durchschnittlichen Menge von 0,1 bis 200 l/s, insbesondere 0,5 bis 10 l/s aufgegeben wird.
